# EUROPEAN PATENT APPLICATION

(11) **EP 4 675 520 A1**
(43) Date of publication of application: **07.01.2026**
(21) Application number: 25187083.8
(22) Date of filing: 02.07.2025
(51) Int. Cl.: G06N 20/00, G06N 5/022

(54) **ARTIFICIAL INTELLIGENCE-ASSISTED BUILDING AND EXECUTION OF A FEDERATED DATA LAYER FOR ENTERPRISE ENGINEERING**

(30) Priority: 02.07.2024 US 202418762274
(71) Applicant: AVEVA Software, LLC, Lake Forest, CA 92630 (US)
(72) Inventor: Wankhede, Moresh, Lake Forest, 92630 (US); Parsons, Leon, Lake Forest, 92630 (US); Chakraborty, Shantanu, Lake Forest, 92630 (US); Meriyani, Merylatha, Lake Forest, 92630 (US); Davidson, Andrew, Lake Forest, 92630 (US); Meyer, Werner, Lake Forest, 92630 (US); Cliff, Timothy, Lake Forest, 92630 (US)
(74) Representative: WBH Wachenhausen Patentanwälte PartG mbB

(57) **Abstract**

Artificial Intelligence-assisted building/execution of federated data layer for enterprise engineering: A system trains at least one machine-learning model to identify information about industrial assets from training data, then map the information to a federated data model. The system retrieves information about data from an application in an industrial asset. The at least one machine-learning model identifies types of the data, relationships between the data, and patterns of the data, from the information and based on data types, data relationships, and data patterns in the federated data model. The at least one machine-learning model maps the types of the data, the relationships between the data, and the patterns of the data to the federated data model. The system identifies knowledge about the types of the data, the relationships between the data, and/or the patterns of the data in the federated data model, in response to a query about data.

## Description

### BACKGROUND

Product lifecycle management, from design, to manufacturing, to service and operations, is very time-consuming in terms of efficiency, manufacturing, intelligence, service phases and sustainability in an enterprise's product design, as recorded in the enterprise's data sources. Efficient deployment and operation of an industrial engineering information platform requires a seamless traversing capability through disparate real-world data sources of various enterprises' industrial assets. These data sources are generally distributed, in many different locations, with data at different sites having different properties, formats and movement cost/restrictions. Although some of the examples in this disclosure describe sites that include data sources as industrial plants, this technology is not limited to such sites, and may apply equally to other sits, such as smart cities, mines, factories, infrastructure, airports, and other potential scenarios.

Enterprises' data sources and systems of record will publish data and artefacts; but much of this data is not designed to work as a coherent whole and there will be overlaps, inconsistencies and a lot of noise. This data also holds an implicit 'imprint' of how an enterprise's business is organized and how its different elements communicate. For most enterprises, this implicit information is not captured or documented in any usable form. The data may be explicitly defined and match industry or other information standards, however experience has shown that even though an enterprise may consider itself to be following an industry standard, there are exceptions, and these can lead to the loss or misinterpretation of data.

An enterprise may benefit if each enterprise data source can be represented as a digital twin, which is a digital model of an intended or actual real-world physical product, system, or process (a physical twin) that serves as the effectively indistinguishable digital counterpart of it for practical purposes, such as designing, simulation, integration, testing, monitoring, and maintenance. The digital twin may be used as the underlying premise for Product Lifecycle Management and exist throughout the entire lifecycle of the physical entity it represents. Since information is detailed, the digital twin representation may be determined by the value-based use cases it is created to implement. The use of a digital twin in the creation phase may allow the intended entity's entire lifecycle to be modeled and simulated. A digital twin of an existing entity may be used in real time and regularly synchronized with the corresponding physical system.

Traditionally, to create a digital twin, a project team of highly skilled, high value consultants may review what data an enterprise has, how it is used and how different elements of this data are related. This data review is not a simple task and requires consultants who know an enterprise's industry, how an industrial engineering information platform and other 3^{rd} party solutions are used by the enterprise and are able to build data and information models to produce the desired results. A key aspect of this data review is an initial data load which brings together the different elements and usually requires several weeks, even to get to a starting point that is viewed by an enterprise. This data review process is costly and requires a significant amount of time and is only affordable by larger enterprises which have the time and money to invest. Many smaller companies and businesses which would benefit from this data review process are financially unable to afford such an option.

### BRIEF DESCRIPTION OF THE DRAWINGS

FIG. 1 illustrates a block diagram of an example system for Artificial Intelligence-assisted building and execution of a federated data layer for enterprise engineering, under an embodiment;
FIG. 2 illustrates a block diagram of an example architecture for Artificial Intelligence-assisted building and execution of a federated data layer for enterprise engineering, under an embodiment;
FIG. 3 illustrates a block diagram of an example functioning of a federated data model for Artificial Intelligence-assisted building and execution of a federated data layer for enterprise engineering, under an embodiment;
FIG. 4 illustrates a block diagram of an example framework for Artificial Intelligence-assisted building and execution of a federated data layer for enterprise engineering, under an embodiment;
FIG. 5 illustrates a block diagram of an example low-level architecture for Artificial Intelligence-assisted building and execution of a federated data layer for enterprise engineering, under an embodiment;
FIG. 6 illustrates a block diagram of an example data model federation for Artificial Intelligence-assisted building and execution of a federated data layer for enterprise engineering, under an embodiment;
FIG. 7 illustrates a block diagram of another example of data model federation for Artificial Intelligence-assisted building and execution of a federated data layer for enterprise engineering, under an embodiment;
FIG. 8 illustrates a block diagram of an example data federation for Artificial Intelligence-assisted building and execution of a federated data layer for enterprise engineering, under an embodiment;
FIG. 9 is a flowchart that illustrates a computer-implemented method for Artificial Intelligence-assisted building and execution of a federated data layer for enterprise engineering, under an embodiment; and
FIG. 10 is a block diagram illustrating an example hardware device in which the subject matter may be implemented.

### DETAILED DESCRIPTION

Embodiments of this disclosure provide Artificial Intelligence-assisted building and execution of a federated data layer for enterprise engineering. A system trains at least one machine-learning model to identify information about industrial assets from training data, then map the information to a federated data model. The system retrieves information about data from an application in an industrial asset. The at least one machine-learning model identifies types of the data, relationships between the data, and patterns of the data, from the information and based on data types, data relationships, and data patterns in the federated data model. The at least one machine-learning model maps the types of the data, the relationships between the data, and the patterns of the data to the federated data model. The system identifies knowledge about the types of the data, the relationships between the data, and/or the patterns of the data in the federated data model, in response to a query about the data.

For example, a system trains machine-learning models to identify information about petroleum refineries, natural gas processing plants, nuclear power plants, and widget production plants from historical data, then map the retrieved information to a federated data model hosted by an industrial engineering information platform. The system retrieves information from a database application for Customized Widgets, a factory that manufactures widgets. The machine-learning models identifies data from this retrieved information, including types of the data for revolutions per minute, which are related to industrial pumps data, and which follow patterns of being displayed collectively, by leveraging information previously stored in the federated data model for the types, relationships, and patterns for data in widget factories, including data for industrial pumps. The machine-learning models map the types of the data, the relationships between the data, and the patterns of the data, including data for the industrial pumps, to the federated data model used by the industrial engineering information platform. Upon receiving a query from Customized Widgets, the system provides best practices information from the database applications for Acme Widgets and BigBiz Widgets recorded in the federated data model, which include types of data for kilowatt hours of electrical consumption, which are related to industrial pumps data, and which follow patterns of being aggregated and then compared to electrical consumption thresholds. This best practices insight from the federated data model provides an immediate "out-of-the-box" benefit by motivating Customized Widgets to install power monitors on their industrial pumps to reduce their power consumption during peak consumption hours when power consumption costs are highest. Immediately upon installing the database application, Customized Widgets was able to query and retrieve an established best practice for the database application, without having to take the time to identify a best practice for the application. This crowd-sourced best practices feature creates an incentive for potential customers to purchase applications from the provider of the federated data model due to the possibility of benefitting from the application's features sooner rather than later.

Various embodiments and aspects of the disclosures will be described with reference to details discussed below, and the accompanying drawings will illustrate the various embodiments. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosure.

Although these embodiments are described in sufficient detail to enable one skilled in the art to practice the disclosed embodiments, it is understood that these examples are not limiting, such that other embodiments may be used, and changes may be made without departing from their spirit and scope. For example, the operations of methods shown and described herein are not necessarily performed in the order indicated and may be performed in parallel. It should also be understood that the methods may include more or fewer operations than are indicated. In some embodiments, operations described herein as separate operations may be combined. Conversely, what may be described herein as a single operation may be implemented in multiple operations.

Reference in the specification to "one embodiment" or "an embodiment" or "some embodiments," means that a particular feature, structure, or characteristic described in conjunction with the embodiment may be included in at least one embodiment of the disclosure. The appearances of the phrase "an embodiment" or "the embodiment" in various places in the specification do not necessarily all refer to the same embodiment.

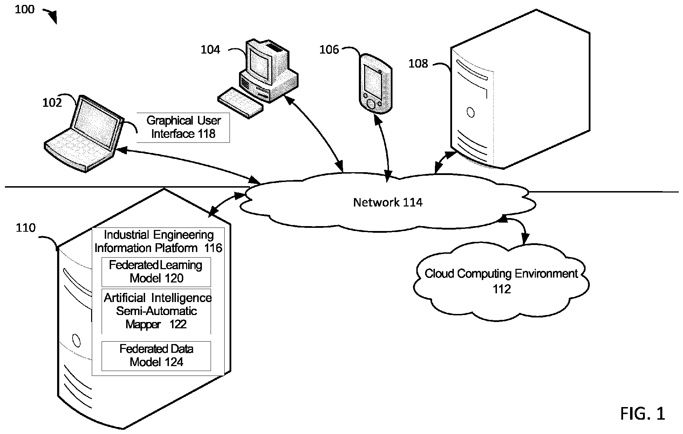

FIG. **1** illustrates a block diagram of an example system **100** for Artificial Intelligence-assisted building and execution of a federated data layer for enterprise engineering, under an embodiment. As shown in FIG. **1****,** the system **100** may illustrate a cloud computing environment in which data, applications, services, and other resources are stored and delivered through shared data centers and appear as a single point of access for the users. The system **100** may also represent any other type of distributed computer network environment in which servers control the storage and distribution of resources and services for different client users.

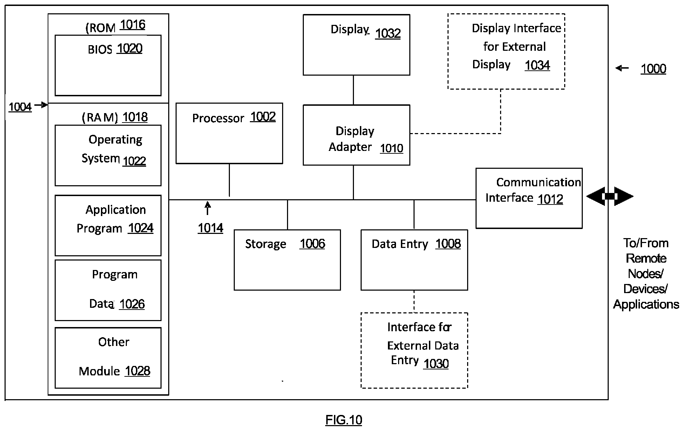

In an embodiment, the system **100** represents a cloud computing system that includes a first client **102,** a second client **104,** a third client **106,** a fourth client **108,** and a server **110** and an optional cloud computing environment **112** that may be provided by a hosting company. The clients **102 - 108,** the server **110,** and the cloud computing environment **112** communicate via a network **114.** Even though FIG. 1 depicts the first client **102** as a laptop computer **102,** the second client **104** as a desktop computer **104,** the third client **106** as a smart phone **106,** and the fourth client **108** as a server, each of the system components **102 - 110** may be any type of computer system, and may each be substantially similar to the hardware device **1000** depicted in FIG. **10** and described below.

The server **110** can host and execute an industrial engineering information platform **116,** which may be accessed via a graphical user interface **118,** as depicted by Fig. 1, and/or reside on any of the clients **102 - 108.** Although FIG. 1 depicts all of the industrial engineering information platform **116** residing completely on the server **110,** any or all of the industrial engineering information platform **116** may reside completely on the clients **102 - 108,** completely on the cloud computing environment **112,** or in any combination of partially on the clients **102 - 108,** partially the server **110,** partially on the cloud computing environment **112** and/or partially on another server which is not depicted in FIG. 1. FIG. 1 depicts the system **100** with four clients **102 - 108,** one server **110,** one cloud computing environment **112,** one network **114,** one industrial engineering information platform **116,** and one graphical user interface **118,** but the system **100** may include any number of clients **102 - 108,** any number of servers **110,** any number of cloud computing environment **112,** any number of network **114,** any number of the industrial engineering information platform **116,** and any number of graphical user interface **118.** The industrial engineering information platform **116** includes a federated learning model **120,** an artificial intelligence semi-automatic mapper **122,** and a federated data model **124,** each of which may be implemented by one or more machine-learning modules, each of which is described in more detail below.

The system **100** takes an artificial intelligence approach to assimilating and loading data to create a digital twin. Rather than using consultants to create a digital twin for product lifecycle management, the system **100** employs artificial intelligence-based recognition of an application's data configurations, such as data types, relationships, and patterns using several different techniques. The system **100** can retrieve varying types of data from disparate data sources without having to physically move data, either for security reasons, such as when an enterprise can but does not want to move the data, or for accessibility reasons, such as when an enterprise wants to but cannot move the data. For example, when the industrial engineering information platform **116** retrieves information about an application's specific data point that measures revolutions per minute from Customized Widgets database, the industrial engineering information platform **116** does not need to retrieve the data value that measures the actual revolutions per minute for any specific point in time. On the contrary, since the industrial engineering information platform **116** retrieves all the information needed to create a digital twin or a local data model for Customized Widgets by classifying the data point as a measurement of revolutions per minute, storing a time series data point which may be updated every minute during every hour of each day would be counter-productive because storing so many data values would be a waste of the medium used to store all of these data values. The industrial engineering information platform 116 can break data down into individual elements or entities, such as when data is provided in a simple comma separated values (CSV) based form, whereas other instances of data may be spread out across several different sources and may have to be pieced together into something that is coherent.

The machine-learning models in the federated learning model **120** can recognize the shapes of data, which may be referred to as the class of data or the type of data, such as data that is classified as revolutions per minute or kilowatts per hour. The types of data may be explicitly defined and match industry or other information standards. However, experience has shown that even though an enterprise may consider itself to be following a standard, there are exceptions, and these exceptions can lead to the loss or misinterpretation of data. Therefore, the machine-learning models in the federated learning model **120** can 'derive' new types of data, based on a given standard, but tailored to a particular enterprise's situation. These new types of data may be reused both for this enterprise and also shared with subsequent enterprises.

The machine-learning models in the federated learning model **120** can also deduce relationships {which may be referred to as ontologies) between entities, such as when there is an explicit relationship provided within the data, and other instances when the machine-learning models in the federated learning model **120** will have to deduce the relationship based on several different factors. For example, the type of data that is used to record power consumption may have a relationship with data that is used to record information about industrial equipment, such as industrial pumps in a factory.

Information pattern recognition is a key element of data ingestion because it provides context about how a given set of entities are being used, updated, and managed. Data structure or pattern recognition enables the machine-learning models in the federated learning model **120** to derive the processes that are being applied to data and how implicit dependencies may exist, such as when data changes in a first source, the changes are expected in the other two sources soon after data changes in the first source. For example, after specific data points that are measured in kilowatts per hour are initially updated with new values, then a data point which is listed in a spreadsheet as an aggregation of power consumption is subsequently updated with an aggregation of the values of the specific data points, then the machine-learning models in the federated learning model **120** learns to derive the process that updates the aggregated data value with an aggregation of the updates of the specific data values. Consequently, the machine-learning models in the federated learning model **120** bind the information irrespective of type, relationship, or pattern to provide a cohesive and unified set on demand and in context.

A machine-learning model can map through artificial intelligence inferencing of data types, relationships of data, and data patterns, such as the underlying structure or trend, from disparate data sources, into the federated data model **124** by leveraging and common knowledge. For example, after deriving the process by which the data points that record power consumption are aggregated into a collective data point that monitors an aggregated power consumption, the machine-learning models in the Artificial Intelligence Semi-Automatic Mapper **122** map these local data points in the Customized Widgets database to their global equivalent data points in the federated data model **124.** Similar to recognizing the data configuration in an application, such as the data types, data relationships, and the data patterns, when the machine learning models are mapping the data configurations identified in an application to the federated data model **124,** the machine-learning models are basing their identifications for the mapping on probabilities. For example, a machine-learning model that has been trained on identifying data points for industrial pumps has determined a probability of 0.90 (90 percent) that a data point in an application is a power consumption data point for an industrial pump, and a machine-learning model that has been trained on mapping data points for industrial pumps has determined a probability of 0.95 (95 percent) that a power consumption data point for an industrial pump in an application should be mapped to the industrial pumps in the federated data model **124.**

Each industry specific data point in the federated data model **124** can enable a mapping process and amalgamation, thereby providing a single point enterprise-wide federated querying for an industrial enterprise engineer. The federated query is a 'many to function as one,' query that may be pushed and traversed on multiple data sources seamlessly, irrespective of slight differences in schema, gathering information automatically to generate insight generation through collation of information and visualization. For example, in response to an industrial engineer in a petroleum refinery entering a query for data about industrial pumps, the industrial engineering information platform **116** retrieves the information in the federated data model 124 about industrial pumps, which includes not only petroleum refinery industrial pumps, but also natural gas processing plants industrial pumps.

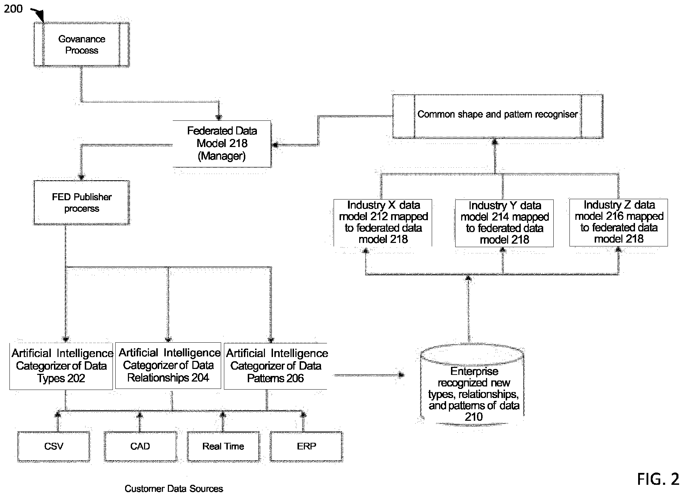

Fig. 2 depicts an example architecture **200** for Artificial Intelligence-assisted building and execution of a federated data layer for enterprise engineering, under an embodiment, in which configurations of data in applications, such as types, relationships, and patterns of data, are being generated based on enterprise data. In this environment, there is the possibility of an explosion of types, relationships, and patterns that cannot be used anywhere other than for that enterprise, such that the need to generate solutions and configurations are tied to a specific scenario, which is where the Federated Data Model comes in. Using an artificial intelligence categorizer of data types **202,** an artificial intelligence categorizer of data relationships **204,** and an artificial intelligence categorizer of data patterns **206,** for all data, both with 'existing' types, relationships, and patterns, and with newly discovered types, relationships, and patterns **210,** which will be linked back to the federated data model **218.** The existing and the newly discovered data may be linked via the Industry X data model **212** mapped to the federated data model **218,** the Industry Y data model **214** mapped to the federated data model **218,** or the Industry Z data model **216** mapped to the federated data model **218.**

Consequently, each entity within an enterprise's data will have an association back to a type, relationship, or pattern in the federated data model **218,** allowing it to be treated as a known type of entity, even if it has never been seen before. For example, if a machine-learning model in a federated learning model assigns a 0.55 probability (55 percent chance) that an unrecognized data point is related to the variable speed efficiency of an industrial pump, then the unrecognized data point will be mapped to a data point for industrial pump efficiency in the federated data model **218.** This enables the federated data model **218,** where possible, to build generic solutions that can deal with newly discovered data types. Over time it is possible that new types, relationships, or patterns **210** which become commonly used across the enterprise's base will be incorporated into the federated data model **218.**

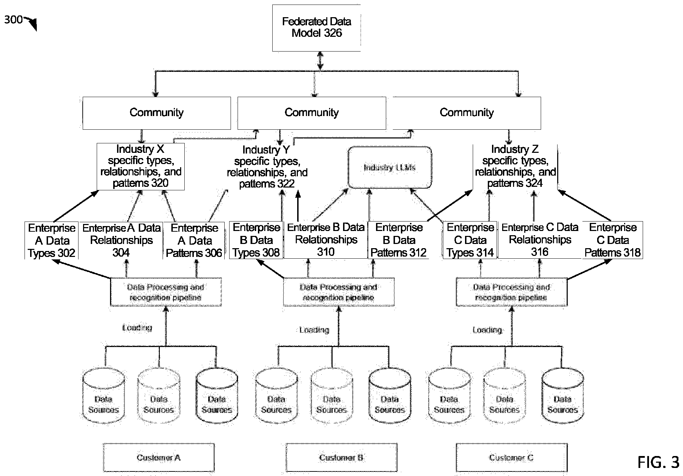

FIG. 3 illustrates a block diagram of an example functioning of a federated data model for Artificial Intelligence-assisted building and execution of a federated data layer for enterprise engineering, under an embodiment. Essentially the recognition of an application's data configuration, such as the data types, relationships, and patterns will be 'crowd sourced' across an enterprise's base, using the process described above to recognize data configurations such as types, relationships, and patterns in data. As described above, a data type may also be referred to as a data shape, a data relationship may also be referred to as a data ontology, and a data pattern may also be referred to as a data structure or a data standard.

Enterprises may cover a few different industries which will each have their own set of common data types, relationships, and patterns, and each enterprise in that industry will use and potentially add to that list of types, relationships, and patterns, which can then be used to identify the data for subsequent enterprises within that industry. For example, enterprise A may have data types **302,** data relationships **304,** and data patterns **306,** which may be recognized by the machine-learning models in the federated learning model **120** using the industry X specific types, relationships, and patterns **320.** In another example, enterprise B may have data types **308,** data relationships **310,** and data patterns **312,** which may be recognized by the machine-learning models in the federated learning model **120** using the industry Y specific types, relationships, and patterns **322.** In yet another example, enterprise C may have data types **314,** data relationships **316,** and data patterns **318,** which may be recognized by the machine-learning models in the federated learning model **120** using the industry Z specific types, relationships, and patterns **324.** As with the individual enterprise case, each type, relationship, and pattern will be mapped back to a type, relationship, and pattern in the federated data model **326,** allowing the industrial engineering information platform **116** to process that type, relationship, and pattern in the correct way.

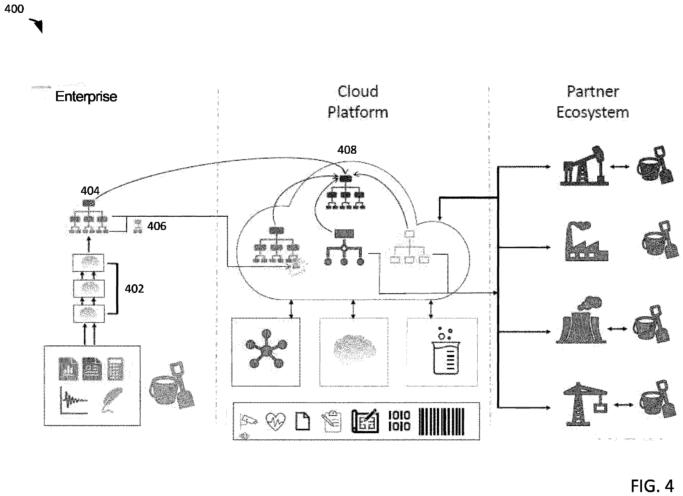

FIG. 4 illustrates a block diagram of an example framework for Artificial Intelligence-assisted building and execution of a federated data layer for enterprise engineering, under an embodiment. Fig. 4 depicts that in step **402,** artificial intelligence recognizers for refinement, connectivity, and concepts retrieve information from a bucket of chaos, which is the enterprise's information landscape, and shape and understand all concepts, tying the concepts back up to the federated data level. In step **404,** am enterprise specific model is generated that has concepts rooted in the federated data model. In step **406,** the new shapes and concepts get pushed back to shared storage. In step **408,** all industry models are linked back to the common federated data model.

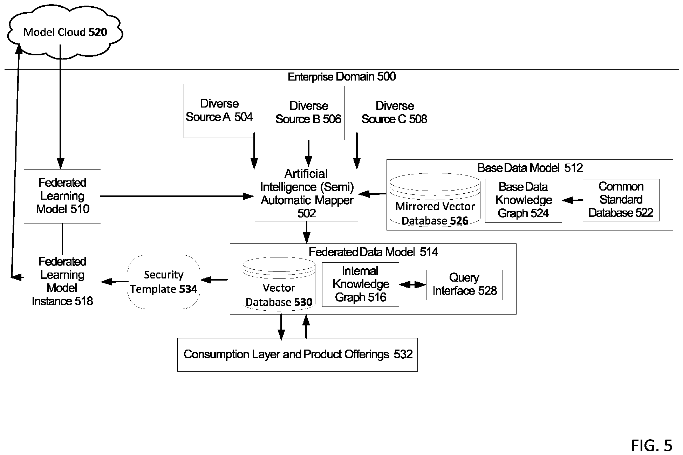

FIG. 5 illustrates a block diagram of an example low-level architecture for Artificial Intelligence-assisted building and execution of a federated data layer for enterprise engineering, under an embodiment. Fig. 5 includes an enterprise domain **500,** in which an artificial intelligence semi-automatic mapper **502** inputs diverse data such as assets, attributes, documents, and timeseries, from a diverse source A **504,** a diverse source B **506,** and a diverse source C **508,** and utilizes a knowledge base consisting of a federated learning model **510** and a base data model **512.** The artificial intelligence semi-automatic mapper **502** applies an advanced inferencing artificial intelligence algorithm, such as a language model or a statistical machine learning, to automatically map data sourced from diverse connected systems, and output a federated data model **514** which contains an internal knowledge graph **516** of the mapped objects with associations.

In an example of a flow of operation outline, an instance **518** of the federated learning model **510** is downloaded from a model cloud **520.** The artificial intelligence semi-automatic mapper **502** uses the instance **518** of the federated learning model **510** to generate the federated data model **514** from the data sources **504** - **508.** A user can use a user interface to provide feedback which refines the federated data model **514,** and update the weight and the associated knowledge graph in the internal machine learning model in the federated learning model **510.** Then the instance **518** of the federated learning model **510** is uploaded back to the model cloud **520** for the next enterprise to use. The base data model **512** uses a common standard database **522** that collates openly available assets and attribute standards to generate an associated base data knowledge graph **524,** which makes use of a mirrored vector database **526** to provide an efficient search interface.

The federated data model **514** is generated by the artificial intelligence semi-automatic mapper **502** and is stored as the internal knowledge graph **516.** The federated data model **514** contains the data model coming from diverse sources. A user can refine the mapped objects via a user interface, thereby updating the internal knowledge graph **516.** The federated data model **514** also contains a query interface **528** which directs all queries going into the internal knowledge graph **516,** makes use of a vector database **530** to provide an efficient search interface, and interacts with consumption layer and product offerings **532.** The refinement process updates the internal knowledge graph **516.**

The machine-learning refinement of the federated learning model **510** includes the federated data model **514** updating the internal machine-learning of the federated learning model **510** with any refinements suggested by the user. The update process needs to go through a security model **534,** which upholds the data sharing mechanism stipulated by the enterprise, such as what and how to share, which is important because the federated learning model **510** will eventually be stored in the model cloud **520** and be shared with other enterprises.

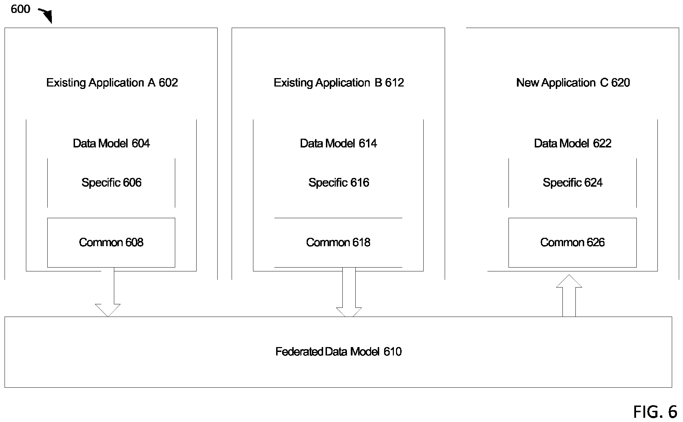

FIG. 6 illustrates a block diagram of an example data model federation for Artificial Intelligence-assisted building and execution of a federated data layer for enterprise engineering, under an embodiment. Mapping local domain-application data to global inter-domain data enables the creation of a knowledge-based marketplace or eco-system, which provides continuous federated learning through sharing of knowledge via enterprises with common industries, domains, and semantics. For example, the existing application A **602** accesses a data model **604** that includes local data that is specific **606** to the existing application A **602** and global data that is common **608** to the federated data model **610** and to other applications. Continuing the example, the existing application B **612** accesses a data model **614** that includes local data that is specific **616** to the existing application B **612** and global data that is common **618** to the federated data model **610,** and the new application C **620** accesses a data model **622** that includes local data that is specific **624** to the new application C **620** and global data that is common **626** to the federated data model **610.**

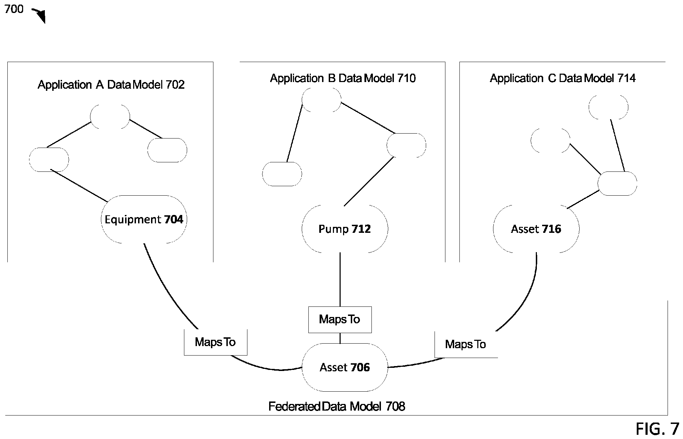

FIG. 7 illustrates a block diagram of another example of data model federation for Artificial Intelligence-assisted building and execution of a federated data layer for enterprise engineering, under an embodiment. Mapping local domain-application data to global inter-domain data, enables the creation of a knowledge-based marketplace or eco-system, which provides continuous federated learning through sharing of knowledge via enterprises with common industries, domains, and semantics. For example, the application A data model **702** maps the equipment **704** to the asset **706** in the federated data model **708.** Despite the difference in semantics, the application B data model **710** maps the pump **712** to the same asset **706** in the same federated data model **708,** and the application C data model **714** maps the asset **716** to the same asset **706** in the same federated data model **708.** Consequently, if an industrial engineer queries the federated data model **708** for the equipment **704** referenced by the application A data model **702,** for the pump **712** referenced by the application C data model **710,** or for the asset **716** referenced by the application C data model **714,** the response will provide the information about the same asset **706** in the same federated data model **708,** which is mapped to the equipment **704,** the pump **712,** and the asset **716.**

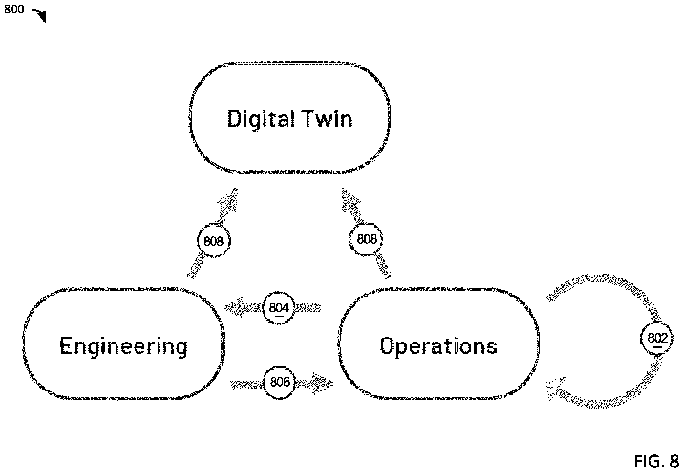

FIG. 8 illustrates a block diagram of an example data federation for Artificial Intelligence-assisted building and execution of a federated data layer for enterprise engineering, under an embodiment. Fig. 8 depicts example interactions **800** between an operations enterprise, engineering, and a digital twin. O2O (operations to operations) **802** represents an existing operations enterprise which adopts a new operations application due to the low threshold and the value of the application being quickly realized. O2E (operations to engineering) **804** represents s a brownfield scenario whereby an operations enterprise deploys engineering applications to simulate, optimize, and design a revamp. E2O (engineering to operations) **806** represents a greenfield process whereby an (EPC) Engineering, Procurement, and Construction enterprise uses an industrial engineering information system to accelerate operational readiness by reducing the time taken to deploy operations applications. Digital Twin **808** represents a federated model which can significantly assist in building, navigating and getting value from a digital twin.

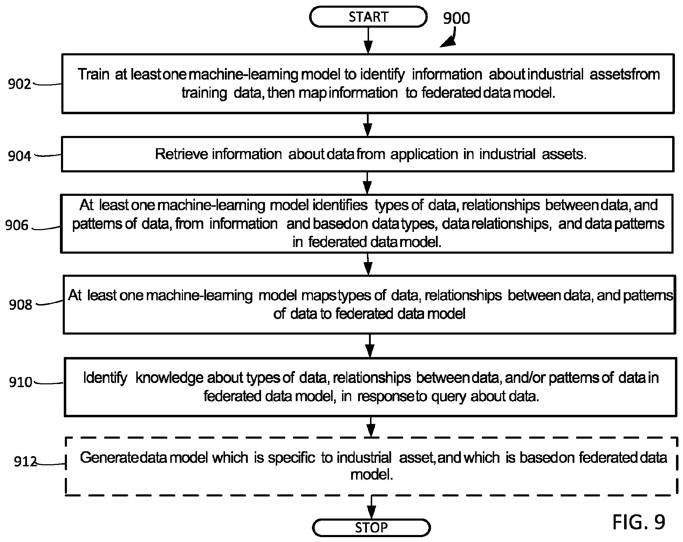

FIG. 9 is a flowchart that illustrates a computer-implemented method for Artificial Intelligence-assisted building and execution of a federated data layer for enterprise engineering, under an embodiment. Flowchart **900** depicts method acts illustrated as flowchart blocks for certain actions involved in and/or between the system elements **102 - 124** of FIG. 1.

At least one machine-learning model is trained to identify information about industrial assets from training data, then map the information to a federated data model, block **902.** The system trains machine-learning models to identify data that is mapped to a federated data model. For example, and without limitation, this can include the system **100** training machine-learning models to identify information about petroleum refineries, natural gas processing plants, nuclear power plants, and widget production plants from historical data, then map the retrieved information to the federated data model **124** hosted by the industrial engineering information platform **116.**

A machine-learning model can be an application of artificial intelligence that provides a system with the ability to automatically learn and improve from experience without being explicitly programmed. Information can be data that is processed, stored, and/or transmitted by a computer. An industrial asset can be a place where the making of goods and/or the providing of services takes place. Training data can be a set of values of variables that are used to instruct the performance of a task. A federated data model can be a simplified description of a system set up as a single centralized unit, within which each division keeps some internal autonomy, to assist with the calculations and predictions of a set of values of variables.

At least one of the at least one machine-learning model or the federated data model is based on published industry standards. A data federation represents the relationship between a federated data model and published industry standards. ISO 15926 is a standard for data integration, sharing, exchange, and hand-over between computer systems. One of the main requirements is that the scope of the data model covers the entire lifecycle of a facility (such as an oil refinery) and its components (such as pipes, pumps and their parts, etc.). Since such a facility over such a long time entails many different types of activities on a myriad of different objects it became clear that a generic and data-driven data model would be required. A simple example will illustrate this. There are thousands of different types of physical objects in a facility, such as pumps, compressors, pipes, instruments, fluids, etc. Each of these objects has many properties. If all combinations were modelled in a "hard-coded" fashion, the number of combinations would be staggering, and unmanageable. The solution is a "template" that represents the semantics of: "This object has a property of X yyyy", where yyyy is the unit of measure. Any instance of that template refers to the applicable reference data: physical object, such as my Induction Motor, indirect property type, such as the class "cold locked rotor time," base property type, here: time, and the scale, here: seconds. Without being able to make reference to those classes, via the Internet, it will be impossible to express this information.

ISO 14224:2016 provides a comprehensive basis for the collection of reliability and maintenance data in a standard format for equipment in all facilities and operations within the petroleum, natural gas and petrochemical industries during the operational life cycle of equipment. This standard describes data collection principles and associated terms and definitions that constitute a reliability language that can be useful for communicating operational experience. The failure modes defined in the normative part of this International Standard can be used as a reliability thesaurus for various quantitative as well as qualitative applications. This International Standard also describes data quality control and assurance practices to provide guidance for the user.

CFIHOS is the Capital Facility Information Handover Specification and offers practical standardized specifications for information handover that work for anyone involved in making, operating, maintaining or decommissioning industrial facilities for everyone in the information supply chain - operators, contractors and equipment manufacturers and suppliers. It organizes data and documents in a structured way so users have the information they need to operate, maintain and decommission a facility, can share information easily with other users/systems, and can find information quickly.

OPC is the Open Platform Communications, a series of standards and specifications for industrial telecommunications. They are based on Object Linking and Embedding for process control. OPC specifies the communication of real-time data between control devices from different manufacturers.

ISA:95, ISA:88, and ISA: 106 are Manufacturing Execution Standards. ANSI/ISA-95, or ISA-95, as it is more commonly referred, is an international standard from the international society of automation for developing an automated interface between enterprise and control systems. This standard has been developed for global manufacturers. It was developed to be applied in all industries, and in all sorts of processes, like batch processes, continuous and repetitive processes.

S88, shorthand for ANSI/ISA88, is a standard addressing batch process control. It is a design philosophy for describing equipment and procedures. It is not a standard for software and is equally applicable to manual processes.

ISA100.11a is a wireless networking technology standard developed by the international society of automation. The official description is "Wireless Systems for Industrial Automation: Process Control and Related Applications."

CIM is a Common Information Model, an electric power transmission and distribution standard developed by the electric power industry. It aims to enable application software to exchange information about an electrical network. It has been officially adopted by the international electrotechnical commission. A published industry standard can be an idea used as a measure, norm, or model in comparative evaluations for a particular branch of economic activity, which is made available so as to be generally known.

After training at least one machine-learning model to identify data that is then mapped to a federated data model, information is retrieved about data from an application in an industrial asset, block **904.** The system retrieves an industrial asset's local data. By way of example and without limitation, this can include the industrial engineering information platform **116** retrieving information about data from the database application in the Customized Widgets factory. Data can be a set of values of qualitative or quantitative variables. An application can be a program or piece of software designed and written to fulfill a particular purpose of the user.

Retrieving information about data from an industrial asset may include dividing the information into individual elements and/or assembling at least some of the information into coherent information. For example, the industrial engineering information platform **116** separates data that is stored as comma separated values into individual values which are separated by the commas. An individual element can be a single component of a system. Coherent information can be data that is processed, stored, and/or transmitted by a computer, and is united, as forming a whole.

Retrieving information about data from an industrial asset may include retrieving information about the data independent of retrieving the data. For example, when the industrial engineering information platform **116** retrieves information about a specific data point that measures revolutions per minute from the Customized Widgets database, the industrial engineering information platform **116** does not need to retrieve the data value that measures the actual revolutions per minute for any specific point in time. On the contrary, since the industrial engineering information platform **116** retrieves all the information needed to create a local data model for Customized Widgets by classifying the data point as a measurement of revolutions per minute, storing a time series data point which may be updated every minute during every hour of each day would be counter-productive because storing so many data values would be a waste of the medium used to store all of these data values.

Following the retrieval of information about data from an industrial asset, at least one machine-learning model identifies types of the data, relationships between the data, and patterns of the data, from the information and based on the data types, data relationships, and data patterns in the federated data model, block **906.** The system uses the trained machine-learning models to leverage the data stored in the federated data model to identify data from the retrieved information. In embodiments, this can include the machine-learning models in the federated learning model **120** identifying data from the retrieved information, including types of the data for revolutions per minute, which are related to industrial pumps data, and which follow patterns of being displayed collectively, by leveraging information previously stored in the federated data model for the types, relationships, and patterns for data in widget factories, including data for industrial pumps.

A type can be a category of things having common characteristics. A relationship can be the way in which two or more concepts or objects are connected. A pattern can be a regular and intelligible form or sequence discernible in certain actions or situations. A data type can be a category of information having common characteristics. A data relationship can be the way in which two or more information concepts or objects are connected. A data pattern can be a regular and intelligible form or sequence of information discernible in certain actions or situations.

Identifying relationships between data may include deducing the relationships and/or identifying an explicit relationship provided within the data. For example, the machine-learning models in the federated learning model **120** identifies that the data points which are measured in units of kilowatts per hour, which is a power consumption, are displayed next to data identified for industrial pumps, which enables the deducing of the relationship between the data points for the power consumed and the industrial pumps as the power consumed by the industrial pumps. An explicit relationship can be the clearly stated way in which two or more concepts or objects are connected.

Identifying patterns of data may include deriving processes that are being applied to the data. For example, the machine-learning models in the federated learning model **120** determines that after the established best practice data displays the power consumption for industrial pumps, the established best practice displays the equivalent of the aggregated values of the power consumptions for the industrial pumps, thereby deriving the process of the established best practice summing the values of the power consumed by the industrial pumps. A process can be a series of actions or steps taken in order to achieve a particular end.

Having identified data from an industrial asset, at least one machine-learning model maps types of the data, relationships between the data, and patterns of the data to a federated data model, block **908.** The system maps the data identified from the industrial asset to a federated data model. For example, and without limitation, this can include the machine-learning models in the Artificial Intelligence Semi-Automatic Mapper **122** mapping the types of the data, the relationships between the data, and the patterns of the data, including data for the industrial pumps, to the federated data model **124** used by the industrial engineering information platform **116.**

After mapping the data from an industrial asset to a federated data model, knowledge is identified about the types of the data, the relationships between the data, and/or the patterns of the data in the federated data model; in response to a query about the data, block **910.** The system responds to queries for knowledge in the federated data model. By way of example and without limitation, this can include the industrial engineering information platform **116** responding to a query from Customized Widgets, by providing established best practices information from Acme Widgets and BigBiz Widgets recorded in the federated data model **124,** which include types of data for kilowatt hours of electrical consumption, which are related to industrial pumps data, and which follow patterns of being aggregated and then compared to electrical consumption thresholds. This best practices insight from the federated data model **124** provides an immediate "out-of-the-box" benefit by motivating Customized Widgets to install power monitors on their industrial pumps to reduce their power consumption during peak consumption hours when power consumption costs are highest. Immediately upon installing the database application, Customized Widgets was able to query and retrieve an established best practice for the database application, without having to take the time to identify a best practice for the application, which is a faster start-up time and decreased time to value for a new application integration and adoption.

Knowledge can be facts and information acquired through the practical understanding of a subject. A query can be a request for specific information.

In addition to creating and using a federated data model, a data model is optionally generated which is specific to the industrial asset, and which is based on the federated data model, block **912.** The system generates a local data model that represents the local industrial asset. In embodiments, this can include the industrial engineering information platform **116** creating any of the local data models **604, 614,** or **622** depicted in fig. **6****,** or the local data models **702, 710,** or **714** depicted in fig. **7****.** A data model can be a simplified description of a system to assist calculations and predictions for a set of values of variables.

Although FIG. 9 depicts the blocks **902** - **912** occurring in a specific order, the blocks **902** - **912** can occur in another order. In other implementations, each of the blocks **902** - **912** can also be executed in combination with other blocks and/or some blocks may be divided into a different set of blocks.

An exemplary hardware device in which the subject matter may be implemented shall be described. Those of ordinary skill in the art will appreciate that the elements illustrated in FIG. **10** can vary depending on the system implementation. With reference to FIG. **10****,** an exemplary system for implementing the subject matter disclosed herein includes a hardware device **1000,** including a processing unit **1002,** a memory **1004,** a storage **1006,** a data entry module **1008,** a display adapter **1010,** a communication interface **1012,** and a bus **1014** that couples elements **1004** - **1012** to the processing unit **1002.**

The bus **1014** can comprise any type of bus architecture. Examples include a memory bus, a peripheral bus, a local bus, etc. The processing unit **1002** is an instruction execution machine, apparatus, or device and can comprise a microprocessor, a digital signal processor, a graphics processing unit, an application specific integrated circuit (ASIC), a field programmable gate array (FPGA), etc. The processing unit **1002** may be configured to execute program instructions stored in the memory **1004** and/or the storage **1006** and/or received via the data entry module **1008.**

The memory **1004** can include a read only memory (ROM) **1016** and a random-access memory (RAM) **1018.** The memory **1004** may be configured to store program instructions and data during operation of the hardware device **1000.** In various embodiments, the memory **1004** can include any of a variety of memory technologies such as static random-access memory (SRAM) or dynamic RAM (DRAM), including variants such as dual data rate synchronous DRAM (DDR SDRAM), error correcting code synchronous DRAM (ECC SDRAM), or RAMBUS DRAM (RDRAM), for example.

The memory **1004** can also include nonvolatile memory technologies such as nonvolatile flash RAM (NVRAM) or ROM. In some embodiments, it is contemplated that the memory **1004** can include a combination of technologies such as the foregoing, as well as other technologies not specifically mentioned. When the subject matter is implemented in a computer system, a basic input/output system (BIOS) **1020,** containing the basic routines that help to transfer information between elements within the computer system, such as during start-up, is stored in the ROM **1016.**

The storage **1006** can include a flash memory data storage device for reading from and writing to flash memory, a hard disk drive for reading from and writing to a hard disk, a magnetic disk drive for reading from or writing to a removable magnetic disk, and/or an optical disk drive for reading from or writing to a removable optical disk such as a CD ROM, DVD or other optical media. The drives and their associated computer-readable media provide nonvolatile storage of computer readable instructions, data structures, program modules and other data for the hardware device **1000.**

It is noted that the methods described herein may be embodied in executable instructions stored in a computer readable medium for use by or in connection with an instruction execution machine, apparatus, or device, such as a computer-based or processor-containing machine, apparatus, or device. It will be appreciated by those skilled in the art that for some embodiments, other types of computer readable media may be used which can store data that is accessible by a computer, such as magnetic cassettes, flash memory cards, digital video disks, Bernoulli cartridges, RAM, ROM, and the like can also be used in the exemplary operating environment. As used here, a "computer-readable medium" can include one or more of any suitable media for storing the executable instructions of a computer program in one or more of an electronic, magnetic, optical, and electromagnetic format, such that the instruction execution machine, system, apparatus, or device can read (or fetch) the instructions from the computer readable medium and execute the instructions for carrying out the described methods. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high-definition DVD (HD-DVD^{™}), a BLU-RAY disc; and the like.

A number of program modules may be stored on the storage **1006,** the ROM **1016** or the RAM **1018,** including an operating system **1022,** one or more applications programs **1024,** program data **1026,** and other program modules **1028.** A user can enter commands and information into the hardware device **1000** through data entry module **1008.** The data entry module **1008** can include mechanisms such as a keyboard, a touch screen, a pointing device, etc.

Other external input devices (not shown) are connected to the hardware device **1000** via an external data entry interface **1010.** By way of example and not limitation, external input devices can include a microphone, joystick, game pad, satellite dish, scanner, or the like. In some embodiments, external input devices can include video or audio input devices such as a video camera, a still camera, etc. The data entry module **1008** may be configured to receive input from one or more users of the hardware device **1000** and to deliver such input to the processing unit **1002** and/or the memory **1004** via the bus **1014.**

A display **1012** is also connected to the bus **1014** via the display adapter **1010.** The display **1012** may be configured to display output of the hardware device **1000** to one or more users. In some embodiments, a given device such as a touch screen, for example, can function as both the data entry module **1008** and the display **1012.** External display devices can also be connected to the bus **1014** via the external display interface **1034.** Other peripheral output devices, not shown, such as speakers and printers, may be connected to the hardware device **1000.**

The hardware device **1000** can operate in a networked environment using logical connections to one or more remote nodes (not shown) via the communication interface **1012.** The remote node may be another computer, a server, a router, a peer device or other common network node, and typically includes many or all of the elements described above relative to the hardware device **1000.** The communication interface **1012** can interface with a wireless network and/or a wired network. Examples of wireless networks include, for example, a BLUETOOTH network, a wireless personal area network, a wireless 802. 21 local area network (LAN), and/or wireless telephony network (e.g., a cellular, PCS, or GSM network).

Examples of wired networks include, for example, a LAN, a fiber optic network, a wired personal area network, a telephony network, and/or a wide area network (WAN). Such networking environments are commonplace in intranets, the Internet, offices, enterprise-wide computer networks and the like. In some embodiments, the communication interface **1012** can include logic configured to support direct memory access (DMA) transfers between the memory **1004** and other devices.

In a networked environment, program modules depicted relative to the hardware device **1000,** or portions thereof, may be stored in a remote storage device, such as, for example, on a server. It will be appreciated that other hardware and/or software to establish a communications link between the hardware device **1000** and other devices may be used.

It should be understood that the arrangement of the hardware device **1000** illustrated in FIG. **10** is but one possible implementation and that other arrangements are possible. It should also be understood that the various system components (and means) defined by the claims, described below, and illustrated in the various block diagrams represent logical components that are configured to perform the functionality described herein. For example, one or more of these system components (and means) may be realized, in whole or in part, by at least some of the components illustrated in the arrangement of the hardware device **1000.**

In addition, while at least one of these components are implemented at least partially as an electronic hardware component, and therefore constitutes a machine, the other components may be implemented in software, hardware, or a combination of software and hardware. More particularly, at least one component defined by the claims is implemented at least partially as an electronic hardware component, such as an instruction execution machine (e.g., a processor-based or processor-containing machine) and/or as specialized circuits or circuitry (e.g., discrete logic gates interconnected to perform a specialized function), such as those illustrated in FIG. **10****.**

Other components may be implemented in software, hardware, or a combination of software and hardware. Moreover, some or all of these other components may be combined, some may be omitted altogether, and additional components may be added while still achieving the functionality described herein. Thus, the subject matter described herein may be embodied in many different variations, and all such variations are contemplated to be within the scope of what is claimed.

In the descriptions above, the subject matter is described with reference to acts and symbolic representations of operations that are performed by one or more devices, unless indicated otherwise. As such, it is understood that such acts and operations, which are at times referred to as being computer-executed, include the manipulation by the processing unit of data in a structured form. This manipulation transforms the data or maintains it at locations in the memory system of the computer, which reconfigures or otherwise alters the operation of the device in a manner well understood by those skilled in the art. The data structures where data is maintained are physical locations of the memory that have particular properties defined by the format of the data. However, while the subject matter is described in a context, it is not meant to be limiting as those of skill in the art will appreciate that various of the acts and operations described hereinafter can also be implemented in hardware.

To facilitate an understanding of the subject matter described above, many aspects are described in terms of sequences of actions. At least one of these aspects defined by the claims is performed by an electronic hardware component. For example, it will be recognized that the various actions may be performed by specialized circuits or circuitry, by program instructions being executed by one or more processors, or by a combination of both. The description herein of any sequence of actions is not intended to imply that the specific order described for performing that sequence must be followed. All methods described herein may be performed in any suitable order unless otherwise indicated herein or otherwise clearly contradicted by context.

While one or more implementations have been described by way of example and in terms of the specific embodiments, it is to be understood that one or more implementations are not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A system for Artificial Intelligence-assisted building and execution of a federated data layer for enterprise engineering, the system comprising:
one or more processors; and
a non-transitory computer readable medium storing a plurality of instructions, which when executed, cause the one or more processors to:
train at least one machine-learning model to identify information about industrial assets from training data, then map the information to a federated data model;
retrieve information about data from an application in an industrial asset;
identify, by the at least one machine-learning model, types of the data, relationships between the data, and patterns of the data, from the information and based on data types, data relationships, and data patterns in the federated data model;
map, by the at least one machine-learning model, the types of the data, the relationships between the data, and the patterns of the data to the federated data model; and
identify knowledge about at least one of the types of the data, the relationships between the data, or the patterns of the data in the federated data model; in response to a query about the data.

2. The system of claim 1, wherein at least one of the at least one machine-learning model or the federated data model is based on published industry standards.

3. The system of claim 1, wherein retrieving information about the data from the application in the industrial asset comprises at least one of dividing the information into individual elements or assembling at least some of the information into coherent information.

4. The system of claim 1, wherein retrieving information about the data from the application in the industrial asset comprises retrieving information about the data independent of retrieving the data.

5. The system of claim 1, wherein identifying the relationships between the data comprises one of deducing a relationship or identifying an explicit relationship listed for the data.

6. The system of claim 1, wherein identifying patterns of the data comprises deriving processes that are being applied to the data.

7. The system of claim 1, wherein the plurality of instructions further causes the processor to generate a data model which is specific to the industrial asset, and which is based on the federated data model.

8. A computer-implemented method for Artificial Intelligence-assisted building and execution of a federated data layer for enterprise engineering, the computer-implemented method comprising:
training at least one machine-learning model to identify information about industrial assets from training data, then map the information to a federated data model;
retrieving information about data from an application in an industrial asset;
identifying, by the at least one machine-learning model, types of the data, relationships between the data, and patterns of the data, from the information and based on data types, data relationships, and data patterns in the federated data model;
mapping, by the at least one machine-learning model, the types of the data, the relationships between the data, and the patterns of the data to the federated data model; and
identifying knowledge about at least one of the types of the data, the relationships between the data, or the patterns of the data in the federated data model; in response to a query about the data.

9. The computer-implemented method of claim 8, wherein at least one of the at least one machine-learning model or the federated data model is based on published industry standards.

10. The computer-implemented method of claim 8, wherein retrieving information about the data from the application in the industrial asset comprises at least one of dividing the information into individual elements or assembling at least some of the information into coherent information.

11. The computer-implemented method of claim 8, wherein retrieving information about the data from the application in the industrial asset comprises retrieving information about the data independent of retrieving the data.

12. The computer-implemented method of claim 8, wherein identifying the relationships between the data comprises one of deducing a relationship or identifying an explicit relationship listed for the data.

13. The computer-implemented method of claim 8, wherein identifying patterns of the data comprises deriving processes that are being applied to the data.

14. The computer-implemented method of claim 8, wherein the computer-implemented method further comprises generating a data model which is specific to the industrial asset, and which is based on the federated data model.

15. A computer program product, comprising a non-transitory computer-readable medium having a computer-readable program code embodied therein to be executed by one or more processors, the program code including instructions to:
train at least one machine-learning model to identify information about industrial assets from training data, then map the information to a federated data model;
retrieve information about data from an application in an industrial asset;
identify, by the at least one machine-learning model, types of the data, relationships between the data, and patterns of the data, from the information and based on data types, data relationships, and data patterns in the federated data model;
map, by the at least one machine-learning model, the types of the data, the relationships between the data, and the patterns of the data to the federated data model; and
identify knowledge about at least one of the types of the data, the relationships between the data, or the patterns of the data in the federated data model; in response to a query about the data.

16. The computer program product of claim 15, wherein at least one of the at least one machine-learning model or the federated data model is based on published industry standards.

17. The computer program product of claim 15, wherein retrieving information about the data from the application in the industrial asset comprises at least one of dividing the information into individual elements, assembling at least some of the information into coherent information, or retrieving information about the data independent of retrieving the data.

18. The computer program product of claim 15, wherein identifying the relationships between the data comprises one of deducing a relationship or identifying an explicit relationship listed for the data.

19. The computer program product of claim 15, wherein identifying patterns of the data comprises deriving processes that are being applied to the data.

20. The computer program product of claim 15, wherein the program code includes further instructions to generate a data model which is specific to the industrial asset, and which is based on the federated data model.
